# DEMANDE DE BREVET EUROPEEN

(11) **EP 1 241 360 A1**
(43) Date de publication de la demande: **18.09.2002**
(21) Numéro de dépôt: 02290679.6
(22) Date de dépôt: 18.03.2002
(51) Int. Cl.: F16B 5/01

(54) **Procédé et dispositif de fixation de plaques en matière plastique, notamment en polycarbonate**

(30) Priorité: 16.03.2001 FR 0103628
(71) Demandeur: KAYSERSBERG PACKAGING, 68320 Kunheim (FR)
(72) Inventeur: Porret, Laurent, 68180 Horbourg-Wihr (FR); Coste, Jean-Philippe, 68240 Kaysersberg (FR)
(74) Mandataire: Jacobson, Claude

(57) **Abrégé**

Procédé de fixation de plaques en matière plastique, ayant une structure alvéolaire formée d'au moins deux nappes reliées par des nervures dans lequel on introduit à l'intérieur de la plaque, en perçant l'une des nappes de la plaque, la tête (8) d'un insert dépliable (6) de façon que cette tête (8) se déplie à l'intérieur d'une alvéole de la plaque sans détériorer la nappe opposée, et empêche ainsi un retrait de l'insert (6) hors de la plaque.

## Description

La présente invention a trait à un procédé de fixation de plaques en matière plastique, notamment des plaques en polycarbonate sur un support quelconque ainsi qu'à un dispositif pour assurer cette fixation.

Par plaque plastique au sens de la présente invention on entend des plaques alvéolaires, en général obtenues par extrusion et comprenant deux nappes parallèles planes entre lesquelles se situent des nervures rejoignant les deux nappes et formant des alvéoles, en général, longitudinales.

Ces plaques sont souvent fabriquées en polycarbonate, mais l'invention peut être également mise en oeuvre sur des plaques réalisées en d'autres matières plastiques, telles que polyéthylène, polypropylène ou autre.

Ces plaques, qui sont découpées à la longueur pour former des panneaux, ont en général une épaisseur comprise entre 16 et 80 mm et une largeur comprise entre 600 et 2100 mm, la longueur dépendant de la découpe, ces dimensions étant données uniquement à titre d'exemple.

Ces plaques alvéolaires sont souvent clippables et possèdent alors, sur leurs deux côtés opposés, des formes complémentaires, par exemple mâle et femelle, de sorte que le bord d'une plaque peut être clippé contre le bord complémentaire de la plaque adjacente, par exemple pour réaliser des bardages, des couvertures ou des cloisons.

Les panneaux formés par ces plaques sont généralement fixés sur des supports, tels que des profilés, s'étendant perpendiculairement à la direction longitudinale des plaques et écartés l'un de l'autre, par exemple, pour assurer une fixation basse et une fixation haute d'un bardage. Souvent, notamment pour les plaques clippables ayant une certaine longueur, ces deux appuis de fixation sont complétés par une fixation destinée à assurer la résistance à la pression ou à la dépression et située à un niveau intermédiaire entre les deux profilés d'appui. Cette fixation est habituellement réalisée par la pose d'un crochet de dépression se fixant dans un bord de clip de la plaque, ce crochet étant ainsi relié d'un côté à la plaque et de l'autre à une lisse intermédiaire. Le nombre de points de fixation intermédiaire est évidemment dépendant de la largeur des panneaux clippables. Une diminution de cette largeur augmente la rigidité de l'assemblage des panneaux, mais nécessite également un nombre plus élevé de crochets placés à la jonction clippable des plaques.

D'un autre côté il peut être avantageux d'utiliser des panneaux clippables de grande largeur tout en assurant une bonne rigidité et une bonne résistance à la pression-dépression, ce qui est impossible avec les moyens connus, puisque le nombre de crochets est tributaire de la largeur du panneau.

L'invention se propose donc de fournir un procédé de fixation de plaques, y compris de panneaux clippables, remédiant à ces inconvénients et permettant, avec une grande facilité, de fixer la plaque constituant le panneau en autant de points intermédiaires qu'on le souhaite, ces points de fixation intermédiaire pouvant être disposés en tout endroit désiré de la largeur du panneau.

Ainsi on peut facilement adapter totalement un assemblage de panneaux à une structure donnée de bâtiment.

Un autre objectif de l'invention est de pouvoir facilement rattraper d'éventuels jeux de montage.

Un autre objectif, encore, est de pouvoir fixer facilement des plaques plastiques non clippables.

L'invention a pour objet un procédé de fixation de plaques en matière plastique, telles que, par exemple, des plaques en polycarbonate, y compris du type clippable, lesdites plaques ayant une structure alvéolaire formée d'au moins deux nappes reliées par des nervures longitudinales et comprenant, le cas échéant, deux bords opposés complémentaires de clippage permettant le clippage d'une plaque à la plaque adjacente, caractérisé en ce que, en remplacement ou en complément de moyens de fixation classiques au niveau des bords, notamment de bords de clippage, on introduit à l'intérieur de la plaque, en perçant l'une des nappes de la plaque, la tête d'un insert dépliable de façon que cette tête se déplie à l'intérieur d'une alvéole longitudinale de la plaque sans détériorer la nappe opposée, et empêche ainsi un retrait de l'insert hors de la plaque.

L'introduction de l'insert dans la partie creuse de l'alvéole de la plaque peut être effectuée à travers un trou préalablement percé dans l'une des nappes parallèles du panneau.

Cependant, en variante, on peut également prévoir des inserts ayant une tête auto-perçante, par exemple, par translation par impact, ou par rotation.

On peut mettre en oeuvre des inserts qui présentent une structure mécanique permettant le dépliage de la tête de l'insert, par exemple à la façon d'un parapluie, pour empêcher le retrait à travers le trou de passage de l'insert.

Ceci peut être effectué, par exemple, à l'aide d'une cheville basculante du commerce.

On peut également utiliser des inserts dont la tête présente des éléments élastiques, par exemple des pattes qui s'effacent pour l'introduction à travers le trou puis se libèrent et prennent une position, par exemple à la manière d'un harpon, qui empêche le retrait ultérieur.

La partie émergeante de l'insert, après mise en place dans le panneau, est reprise, conformément au procédé selon l'invention, sur un support et fixée sur ce support par un moyen convenable.

Par exemple cet insert peut être fixé par un système de vis et/ou un serrage de type écrou sur un support tel qu'une panne ou lisse intermédiaire. De préférence, la partie émergeante de l'insert présente une longueur suffisante pour pouvoir être fixée sur ce support en un emplacement quelconque de sa longueur, permettant ainsi d'adapter la distance entre la tête de l'insert, et donc le panneau, et le support.

Conformément à l'invention on peut assurer une étanchéité à l'air et/ou à l'eau, en munissant l'insert d'un élément d'étanchéité, par exemple, une rondelle d'étanchéité ou un bouchon d'étanchéité, qui peut être fixé, soit au niveau de la tête et venir prendre appui sur la face interne de la nappe qui a été traversée, soit sur la partie externe, pour venir s'appuyer contre la surface externe de la nappe du panneau.

L'invention a également pour objet des inserts pour la mise en oeuvre du procédé selon l'invention, caractérisés en ce qu'ils présentent une tête susceptible de se déplier ou de basculer à l'intérieur d'une alvéole de panneau, et une partie extérieure reliée à la tête, avec, éventuellement, des moyens d'étanchéité.

Elle a également trait à l'utilisation d'inserts connus pour la fixation de panneaux par le procédé selon l'invention.

D'autres avantages et caractéristiques de l'invention apparaîtront à la lecture de la description suivante, faîte à titre d'exemple non limitatif et se référant au dessin annexé dans lequel :
La figure 1 représente une vue schématique, en coupe transversale du panneau, d'un insert en cours d'introduction dans le panneau pour la fixation ;
La figure 2 représente une vue de cet insert immobilisé dans le panneau ;
La figure 3 représente une vue de l'insert ainsi immobilisé et fixé sur une lisse intermédiaire.

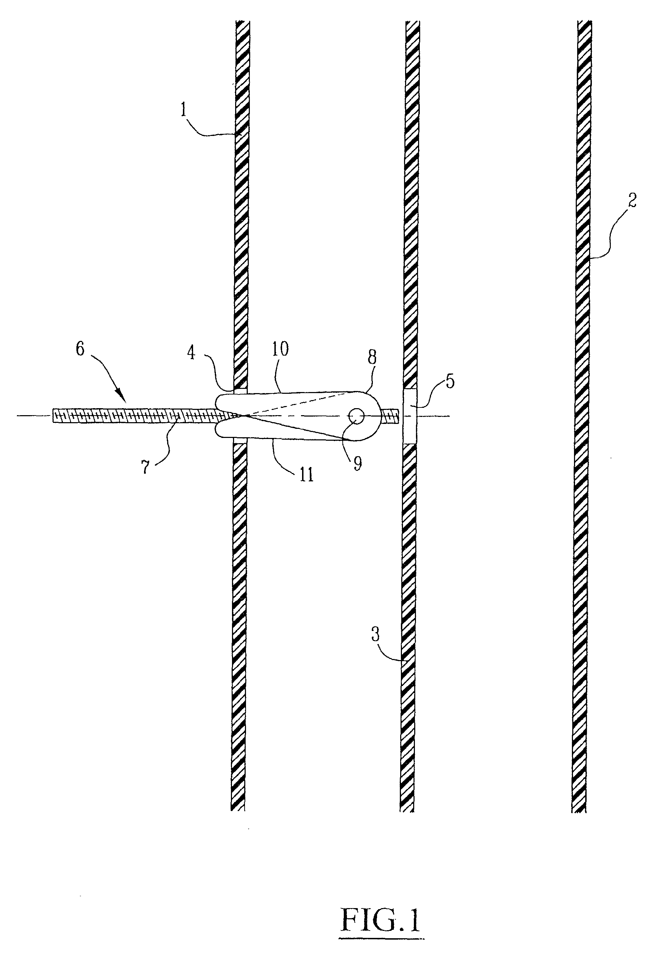

On a représenté sur la figure 1 un panneau formé par découpage dans la longueur, et utilisé en pose de bardage vertical.

La plaque ainsi réalisée est d'un type en soi connu et comprend deux nappes ou couvertures extrêmes 1, 2 et une nappe parallèle intermédiaire 3, la nappe 1 formant la paroi interne du bardage formé par ces panneaux, et la nappe externe 2 formant la paroi externe du bardage. Les nappes 1 et 3, et 3 et 2 sont reliées l'une à l'autre par des nervures formant autant d'alvéoles parallèles longitudinales et non représentées sur le dessin. Une telle plaque destinée à former ces panneaux peut être obtenue par extrusion dans une filière qui extrude parallèlement les trois nappes 1, 2 et 3 et, perpendiculairement ou obliquement par rapport à ces nappes, des nervures continues et s'étendant toutes dans la direction d'extrusion et qui rejoignent d'un seul tenant les différentes nappes.

De tels panneaux sont décrits, par exemple, dans FR-A-2732386, ces panneaux ayant deux bords parallèles de forme complémentaire, de façon qu'un panneau puisse être clippé par l'un des bords dans le bord complémentaire du panneau adjacent.

Dans la disposition des figures 1 à 3, les nervures, qui forment des alvéoles longitudinales, peuvent s'étendre, par exemple, longitudinalement en étant parallèles au plan de la figure ou au contraire perpendiculairement à ce plan.

Un panneau de ce type a, par exemple, une épaisseur de 40 mm.

Pour fixer le panneau en un point intermédiaire quelconque sur un support fixe, on fore préalablement un trou 4 dans la nappe interne 1. On peut, si on le souhaite, prolonger ce trou par un trou 5 dans la nappe intermédiaire, mais on évite de perforer la nappe externe 2.

Dans le trou 4 ainsi formé on vient introduire un insert désigné généralement par 6 et composé d'une tige filetée 7 portant, vers l'une des extrémités, une tête 8 munie de deux bras 9, 10 susceptibles de pivoter autour d'un axe 11 perpendiculaire à la tige 6. De tels inserts peuvent être, par exemple, des chevilles déployables du commerce et dont l'encombrement total axial de la tête 8 à l'état replié, en direction de la tige 7, n'est pas supérieur à la distance séparant les nappes 1 et 3.

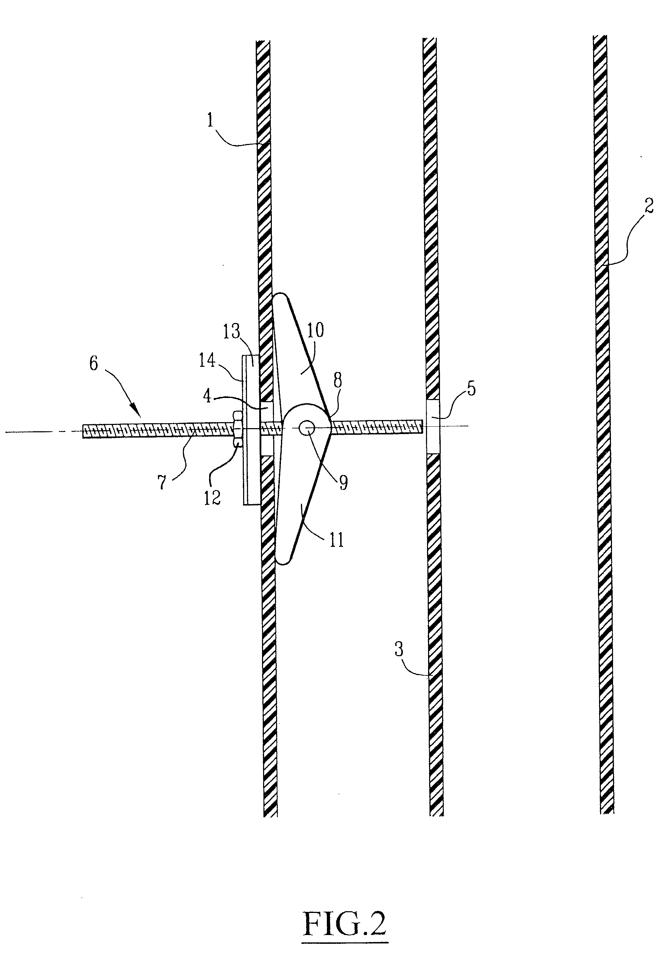

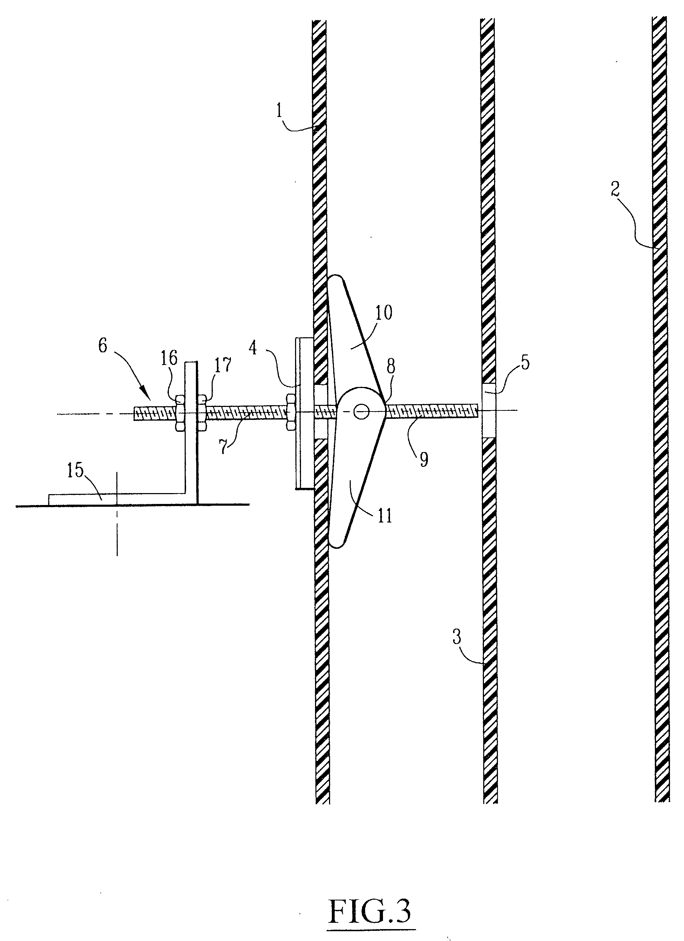

Une fois complètement introduite dans cet espace entre les nappes 1 et 3, la tête 8 est amenée à se déployer par basculement des bras 9 et 10 autour de l'axe 11, comme dans la position représentée sur les figures 2 et 3. Dans cette position, les bras 10 et 11 sont dans leur position extrême de rotation et ne peuvent pas être davantage déployés. Les bras prennent appui sur la face intérieure de la nappe 1 et s'opposent donc à l'extraction de l'insert 7.

Dans le cas où les nervures de la structure alvéolaire de la plaque s'étendent parallèlement au plan de la figure, les bras 10 et 11, dans leur position se déploient sans problème. Dans le cas où les nervures s'étendent perpendiculairement à la figure, pour éviter que les bras 10 et 11 se heurtent aux nervures si celles-ci sont trop rapprochées, il suffit de pivoter l'insert 6 pour que les bras 10 et 11 puissent se déployer.

Pour fixer l'insert représenté, on utilise un écrou 12 qui vient se visser sur la tige filetée 7, comme on le voit sur la figure 2, de préférence avec interposition d'un joint circulaire plat d'étanchéité 13 et d'une rondelle 14, le serrage de l'écrou 7 provoquant le pincement de la nappe 1 entre les pattes 10 et 11, d'une part et l'ensemble joint, rondelle et écrou, d'autre part, tout en assurant une parfaite étanchéité au niveau du trou 4.

Grâce à la tige filetée 7, on peut, comme on le voit sur la figure 3, monter le dispositif sur une lisse ou panne intermédiaire 15 vue en section, par exemple, grâce à deux écrous 16 et 17. L'utilisation de la tige filetée 7 permet un réglage facile de la distance entre la panne 15 et la plaque.

La fixation selon l'invention peut être effectuée un grand nombre de fois sur une plaque.

On comprend que l'on peut remplacer l'insert 6 par tout autre type d'insert possédant, au niveau de sa tête introduite au niveau de la plaque, des éléments dépliables et empêchant le recul et l'extraction de l'insert, ces éléments repliables pouvant, soit être déployés par un moyen mécanique, soit se déployer d'eux-mêmes élastiquement en étant effacés lors de l'introduction à travers le trou 4.

## Revendications

1. Procédé de fixation de plaques en matière plastique, telles que, par exemple, des plaques en polycarbonate, y compris du type clippable, lesdits panneaux ayant une structure alvéolaire formée d'au moins deux nappes reliées par des nervures longitudinales et comprenant, le cas échéant, deux bords opposés complémentaires de clippage permettant le clippage d'une plaque à la plaque adjacente, **caractérisé en ce que** l'on introduit à l'intérieur de la plaque, en perçant l'une des nappes de la plaque, la tête (8) d'un insert dépliable (6) de façon que cette tête (8) se déplie à l'intérieur d'une alvéole longitudinale de la plaque sans détériorer la nappe opposée, et empêche ainsi un retrait de l'insert (6) hors de la plaque.

2. Procédé selon la revendication 1, **caractérisé en ce que** l'introduction de l'insert (6) dans la partie creuse de l'alvéole de la plaque est effectuée à travers un trou (4) préalablement percé dans l'une des nappes parallèles du panneau.

3. Procédé selon l'une des revendications 1 et 2 **caractérisé en ce que** l'on utilise des inserts (6) qui présentent une structure mécanique permettant le dépliage de la tête de l'insert, pour empêcher le retrait à travers le trou (4) de passage de l'insert.

4. Procédé selon la revendication 3 **caractérisé en ce que** l'insert est une cheville basculante du commerce.

5. Procédé selon l'une des revendications 1 et 2 **caractérisé en ce que** l'on utilise des inserts dont la tête présente des éléments élastiques qui s'effacent pour l'introduction à travers le trou (4) puis se libèrent et prennent une position qui empêche le retrait ultérieur.

6. Procédé selon l'une quelconque des revendications 1 à 5, **caractérisé en ce que** la partie émergeante (7) de l'insert, après mise en place dans le panneau, est fixée sur un support (15) par un moyen convenable.

7. Procédé selon la revendication 6 **caractérisé en ce que** l'insert (6) est fixé par un système de vis et/ou un serrage de type écrou sur un support tel qu'une panne ou lisse intermédiaire (15).

8. Procédé selon l'une des revendications 6 et 7 **caractérisé en ce que** la partie émergeante (7) de l'insert présente une longueur suffisante pour pouvoir être fixée sur ce support en un emplacement quelconque de sa longueur, permettant ainsi d'adapter la distance entre la tête de l'insert, et donc le panneau et le support.

9. Procédé selon l'une quelconque des revendications 1 à 8 **caractérisé en ce que** l'on assure une étanchéité à l'air et/ou à l'eau, en munissant l'insert d'un élément d'étanchéité (13).

10. Inserts pour la mise en oeuvre du procédé selon l'une quelconque des revendications 1 à 9 **caractérisés en ce qu'**ils présentent une tête susceptible de se déplier ou de basculer à l'intérieur d'une alvéole de panneau, et une partie extérieure reliée à la tête, avec, éventuellement, des moyens d'étanchéité.
